# EUROPÄISCHE PATENTSCHRIFT

(11) **EP 2 493 745 B1**
(45) Veröffentlichungstag und Bekanntmachung des Hinweises auf die Patenterteilung: **05.08.2015**
(21) Anmeldenummer: 10771079.0
(22) Anmeldetag: 19.10.2010
(51) Int. Cl.: B62D 15/02, G01S 15/93, G01S 15/42, G01S 15/87, G01S 13/93, G01S 15/46

(54) **VERFAHREN ZUR UNTERSTÜTZUNG BEIM AUSPARKEN**
METHOD FOR SUPPORT WHEN DRIVING OUT OF A PARKING SPACE
PROCÉDÉ D'ASSISTANCE PERMETTANT DE SORTIR D'UNE PLACE DE STATIONNEMENT

(30) Priorität: 29.10.2009 DE 102009046163
(43) Veröffentlichungstag der Anmeldung: 05.09.2012
(73) Patentinhaber: Robert Bosch GmbH, 70442 Stuttgart (DE)
(72) Erfinder: NIEMZ, Volker, 71277 Rutesheim (DE)
(86) Internationale Anmeldenummer: PCT/EP2010/065691
(87) Internationale Veröffentlichungsnummer: WO 2011/051137

(56) Entgegenhaltungen:
- WO-A1-2009/121534
- DE-A1-102005 046 827
- DE-A1-102007 029 773

## Beschreibung

### Stand der Technik

Die Erfindung betrifft ein Verfahren zur Unterstützung eines Fahrers beim Ausparken eines Fahrzeugs aus einer Parklücke. Weiterhin betrifft die Erfindung ein Fahrassistenzsystem zur Unterstützung eines Fahrers eines Fahrzeugs beim Ausparken aus einer Parklücke.

Derzeit im Einsatz sind Systeme, die einem Fahrer eines Kraftfahrzeugs Informationen über den Abstand zu Objekten liefern. Hierzu wird der Abstand durch Sensoren, die sich üblicherweise im vorderen und im hinteren Stoßfängerbereich des Kraftfahrzeugs befinden, gemessen und dem Fahrer angezeigt. Dies erfolgt im Allgemeinen durch eine optische oder akustische Anzeige des Abstands. Die optische Anzeige kann zum Beispiel durch eine 2-D-Darstellung erfolgen, die das Fahrzeug in Vogelperspektive zeigt und den Abstand zu von den Sensoren erfassten Objekten darstellt. Alternativ ist auch eine Anzeige mit Leuchtbalken gebräuchlich, wobei die Anzahl der aufleuchtenden Leuchtbalken mit abnehmendem Abstand zunimmt. Alternativ oder zusätzlich ist auch eine akustische Anzeige üblich, bei der Töne gesendet werden, deren Abstand mit abnehmendem Abstand des Fahrzeugs zu einem Objekt ebenfalls abnimmt.

Neben diesen rein informativen Systemen sind auch semi-autonome Einparkhilfen im Einsatz, bei denen zunächst durch Einsatz von geeigneten Sensoren eine Parklücke vermessen wird und anschließend eine geeignete Einfahrtrajektorie in die Parklücke berechnet wird. Zum Einparken werden dem Fahrer dann Lenkanweisungen gegeben, um die Fahrtrajektorie zu überfahren oder es erfolgt ein automatisierter Lenkeingriff, durch den das Fahrzeug selbsttätig in die Parklücke eingeparkt wird.

Neben solchen Einparksystemen ist aus DE-A 10 2007, 029 773 ebenfalls bekannt, dem Fahrer eine Unterstützung beim Ausparken aus einer Parklücke zu geben. Hierzu wird das Fahrzeug automatisiert durch Lenkeingriff aus der Parklücke in eine Position gebracht, die ein Einfahren in den fließenden Verkehr ermöglicht. Um dem Fahrer zu ermöglichen, die Bewegungsrichtung, die das Fahrzeug ausführen wird, vorauszusehen, wird dem Fahrer die Lenkungsstellung der Räder graphisch angezeigt.

Nachteil dieses Systems ist, dass der Fahrer auf der Anzeige die Stellung der Räder verfolgen muss, um eine unerwünschte Bewegungsrichtung bei der Übernahme vom automatisierten System zu vermeiden.

Aus WO 2009/121534 ist ein Verfahren zur Unterstützung eines Ausparkvorgangs aus einer seitlichen Parklücke bekannt. Dabei wird zunächst die Parklückenlänge und gegebenenfalls weitere Größen wie die Parklückentiefe, die Ausrichtung des Fahrzeugs und/oder der Abstand zu die Parklücke begrenzenden Objekten gemessen, und aus den so gewonnenen Daten eine optimale Ausparktrajektorie berechnet. Dann wird das Fahrzeug geführt oder autonom in eine Position gebracht, die das Ausfahren aus der Parklücke in einem einzigen Zug ermöglicht.

Aus DE 10 2005 046 827 A1 ist ein Verfahren zur Einparkunterstützung bekannt, bei dem das Fahrzeug zunächst in eine nicht abschließende Position in eine Parklücke gesteuert wird. Daraufhin erfolgt eine Vermessung der Parklücke und eine Berechnung eines abschließenden Einparkvorgangs unter Berücksichtigung der gemessenen Umfelddaten.

### Offenbarung der Erfindung

### Vorteile der Erfindung

Das erfindungsgemäße Verfahren zur Unterstützung eines Fahrers beim Ausparken eines Fahrzeugs aus einer Parklücke umfasst folgende Schritte:
(a) Bringen des Fahrzeugs in eine Position, die ein Ausfahren aus der Parklücke durch eine Vorwärtsbewegung des Fahrzeugs erlaubt, unter Einsatz einer automatischen Lenkführung,
(b) Ausrichten der lenkbaren Räder durch einen automatischen Lenkeingriff in eine Radstellung, die ein Ausfahren aus der Parklücke in Richtung der Straßenführung ermöglicht.

Durch das Ausrichten der lenkbaren Räder durch einen automatischen Lenkeingriff in eine Radstellung, die ein Ausfahren aus der Parklücke in Richtung der Straßenführung ermöglicht, wird eine zusätzliche Sicherheitsoption bereitgestellt, da hierdurch vermieden werden kann, dass das Fahrzeug bei Übernahme der Fahrzeugsteuerung durch den Fahrer eine ungewünschte Bewegung zum Beispiel auf die Gegenfahrbahn macht, was zu einer gefährlichen Situation führen kann. So könnte zum Beispiel durch das Einschwenken des Fahrzeugs auf die Gegenfahrbahn eine Kollision mit einem entgegenkommenden Fahrzeug erfolgen. Durch eine geeignete Position der Räder, die ein Ausfahren aus der Parklücke in Richtung der Straßenführung ermöglicht, wird ein solches Ausscheren des Fahrzeugs verhindert.

Insbesondere beim Ausparken aus kleinen Parklücken ist es vorteilhaft, wenn das Ausrichten der lenkbaren Räder in Schritt (b) im Stillstand erfolgt. Das Ausrichten der lenkbaren Räder im Stillstand erlaubt die maximale Ausnutzung der Länge der Parklücke, um das Fahrzeug in eine Position zu bringen, die das Ausfahren aus der Parklücke durch eine Vorwärtsbewegung erlaubt. Es wird keine zusätzliche Fahrstrecke zum Ausrichten der Räder benötigt.

Wenn die Parklücke ausreichend groß ist, kann das Ausrichten der lenkbaren Räder alternativ jedoch auch während eines letzten Rangierzuges erfolgen. In diesem Fall bewegt sich das Fahrzeug beim Ausrichten der Räder und fährt entlang einer Klothoide. Das Ausrichten der Räder während des letzten Rangierzuges hat zudem den Vorteil, dass die Beanspruchung der Reifen gegenüber einer Lenkbewegung im Stillstand reduziert wird.

In einer Ausführungsform der Erfindung wird die Straßenführung durch Kartenmaterial in einem Navigationsgerät des Fahrzeugs ermittelt. Das Navigationsgerät kann dabei jedes beliebige, dem Fachmann bekannte Navigationsgerät sein. Üblicherweise eingesetzte Navigationsgeräte sind derzeit GPS-Navigationssysteme. Durch den Einsatz des GPS-Navigationssystems lässt sich durch das GPS die Position des Fahrzeugs bestimmen, so dass durch die Position des Fahrzeugs und das Kartenmaterial des Navigationssystems die Straßenführung im Bereich der Parklücke bestimmt werden kann. Erfindungsgemäß ist vorgesehen, die Straßenführung durch Erfassung der Bewegungsrichtung vorbeifahrender Fahrzeuge zu ermitteln. Vorbeifahrende Fahrzeuge bewegen sich im Allgemeinen in Richtung der Straßenführung, so dass die Bewegungsrichtung des Fahrzeugs ein hinreichendes Indiz für die Ermittlung der Straßenführung ist. Die Bewegungsrichtung vorbeifahrender Fahrzeuge kann zum Beispiel durch Videosensorik oder Radarsensoren erfasst werden. Auch beliebige andere Sensoren, mit denen die Bewegungsrichtung eines Fahrzeugs ermittelt werden kann, können eingesetzt werden. Bei Verwendung einer Videosensorik oder von Radarsensoren werden die von den Sensoren erfassten Daten üblicherweise an eine Prozessoreinheit gesendet und in dieser verarbeitet. Aus den ermittelten Daten lässt sich dann die Bewegungsrichtung des Fahrzeugs bestimmen. Zur Bestimmung der Straßenführung kann sowohl die Bewegungsrichtung eines in geplanter Fahrtrichtung des Fahrzeugs fahrenden Fahrzeugs als auch ein in Gegenrichtung fahrendes Fahrzeug genutzt werden. Die Ermittlung der Straßenführung durch Erfassung der Bewegungsrichtung vorbeifahrender Fahrzeuge kann durch eine Ermittlung der Straßenführung durch Kartenmaterial in einem Navigationsgerät des Fahrzeugs ergänzt werden. Insbesondere beim Parken in wenig befahrenen Gegenden ist es vorteilhaft, die Straßenführung zusätzlich durch Kartenmaterial im Navigationsgerät zu ermitteln.

Wenn eine Ermittlung der Straßenführung nicht möglich ist, ist es vorteilhaft, dem Fahrer eine Warnung auszugeben, dass die lenkbaren Räder nicht ausgerichtet werden konnten.

Alternativ zur Ermittlung der Straßenführung durch Kartenmaterial im Navigationsgerät oder durch Erfassung der Bewegungsrichtung vorbeifahrender Fahrzeuge ist es auch möglich, die lenkbaren Räder nach festgesetzten Grenzen, die in einem Speicher abgelegt sind, auszurichten. Die festgesetzten Grenzen, die im Speicher abgelegt sind, sind zum Beispiel die beim Einparken des Fahrzeugs erfasste Umgebung des Fahrzeugs und die Begrenzungen der Parklücke. Bei einer Längsparklücke sind die parkenden Fahrzeuge im Allgemeinen entlang der Straßenführung ausgerichtet, so dass die Ausrichtung der vor oder hinter dem Fahrzeug parkenden Fahrzeuge genutzt werden kann, um die Straßenführung zu bestimmen. Entsprechend kann auch bei einer Querparklücke die Ausrichtung der weiteren, neben dem eigenen Fahrzeug parkenden Fahrzeuge genutzt werden, um die Straßenführung zu bestimmen. Die Verwendung von festgesetzten Grenzen, die in einem Speicher abgelegt sind, ist insbesondere dann vorteilhaft, wenn eine Ermittlung der Straßenführung durch das Navigationsgerät oder durch Erfassung der Bewegungsrichtung vorbeifahrender Fahrzeuge nicht möglich ist. Es kann jedoch auch eine Überprüfung der durch das Kartenmaterial oder die Bewegungsrichtung vorbeifahrender Fahrzeuge ermittelte Straßenführung mithilfe der im Speicher abgelegten festgesetzten Grenzen erfolgen. Hierdurch lassen sich zum Beispiel fehlerhafte Messungen oder fehlerhafte Daten des Kartenmaterials erkennen und dem Fahrer kann bei Nichtübereinstimmung zum Beispiel eine Warnung ausgegeben werden.

Um ein Ausfahren des Fahrzeugs in Richtung der Straßenführung zu ermöglichen ist es insbesondere vorteilhaft, wenn die Räder in Schritt (b) in Richtung der Straßenführung ausgerichtet werden. Jedoch kann es in Abhängigkeit von der Straßenführung auch sinnvoll sein, die Räder nicht direkt in Richtung der Straßenführung auszurichten, was jedoch einen notwendigen Lenkeingriff beim Ausfahren aus der Parklücke durch den Fahrer erfordert. Bevorzugt ist deshalb eine Ausrichtung der lenkbaren Räder in Richtung der Straßenführung.

In einer bevorzugten Ausführungsform erfolgt das in Position bringen des Fahrzeugs automatisch sowohl durch automatische Lenkführung als auch durch eine automatische Längsführung. Bei der automatischen Längsführung wird das Fahrzeug entsprechend der berechneten Fahrtrajektorie automatisch vorwärts und rückwärts bewegt, bis die Position erreicht ist, die ein Ausfahren aus der Parklücke durch Vorwärtsbewegung des Fahrzeugs erlaubt. Alternativ ist es jedoch auch möglich, dass der Fahrer durch Betätigung von Fahrpedal und Bremspedal die Längsführung übernimmt und die Lenkführung automatisch erfolgt.

Um eine Kollision mit einem Objekt in der Umgebung des Fahrzeugs während des Ausparkens zu vermeiden, ist es weiterhin vorteilhaft, wenn während des in Position bringen des Fahrzeugs in Schritt (a) die Fahrzeugumgebung kontinuierlich erfasst wird.

Zur Durchführung des Verfahrens wird im Allgemeinen ein Fahrassistenzsystem eingesetzt. Ein solches Fahrassistenzsystem zur Unterstützung des Fahrers eines Fahrzeuges beim Ausparken aus einer Parklücke umfasst:
- Mittel zur Bestimmung von Fahrtrajektorien, um das Fahrzeug in eine Position zu bringen, die ein Ausfahren aus der Parklücke durch eine Vorwärtsbewegung erlaubt,
- Mittel zur Bestimmung der Straßenführung und
- eine Steuereinheit, die in Abhängigkeit der Fahrtrajektorien einen Lenkeingriff vornimmt, um das Fahrzeug entlang der Fahrtrajektorien zu bewegen sowie nach dem in Position bringen, durch die ein Ausfahren aus der Parklücke durch eine Vorwärtsbewegung erlaubt ist, einen Lenkeingriff vornimmt, um die Räder in eine Radstellung zu bringen, die ein Ausfahren aus der Parklücke entlang der Straßenführung ermöglicht.

Die Mittel zur Bestimmung von Fahrtrajektorien sind zum Beispiel ein Steuergerät, das einen geeigneten Prozessor umfasst, mit dem die Fahrtrajektorien berechnet werden können. Hierzu ist das Steuergerät vorzugsweise mit Sensoren zur Umfelderkennung, beispielsweise Ultraschallsensoren, Radarsensoren, Infrarotsensoren, kapazitiven Sensoren oder LIDAR-Sensoren, verbunden, die das Umfeld des Fahrzeuges erfassen. Als Mittel zur Bestimmung der Straßenführung können ebenfalls die Sensoren und das Steuergerät eingesetzt werden. So kann erfindungsgemäß durch Erfassen der Bewegungsrichtung von Fahrzeugen die Straßenführung bestimmt werden. Die Erfassung der Bewegungsrichtung erfolgt dabei durch geeignete Sensoren, deren Signale an die Steuereinheit übermittelt werden. In der Steuereinheit wird dann die Straßenführung berechnet. Weiterhin ist die Steuereinheit mit dem Lenkaktor verbunden, der den Lenkeingriff vornimmt. Der entsprechende Lenkeingriff wird durch die berechneten Fahrtrajektorien bzw. die Straßenführung vorgegeben.

Durch das erfindungsgemäße Fahrassistenzsystem ist somit eine weitgehende Unterstützung des Fahrers beim Ausparken des Fahrzeugs möglich, die durch den Lenkeingriff, mit dem die Räder in eine Radstellung gebracht werden, die ein Ausfahren aus der Parklücke entlang der Straßenführung ermöglicht, eine zusätzliche Sicherheitsoption bereitstellt.

### Kurze Beschreibung der Zeichnungen

Ausführungsbeispiele der Erfindung sind in den Figuren dargestellt und werden in der nachfolgenden Beschreibung näher erläutert.

Es zeigen:
- Figur 1: eine schematische Darstellung eines Fahrzeugs mit Abstandsensoren und durch die Abstandssensoren erfasstem Bereich,
- Figur 2: ein in eine Längsparklücke eingeparktes Fahrzeug,
- Figur 3: ein Fahrzeug in einer Längsparklücke in einer Position, die ein Ausfahren durch Vorwärtsbewegung erlaubt,
- Figur 4: eine Bahn, entlang der sich ein Fahrzeug bei ungünstiger Radstellung bewegt,
- Figur 5: eine Bahn, entlang der sich ein Fahrzeug bei günstiger Radstellung bewegt.

### Ausführungsformen der Erfindung

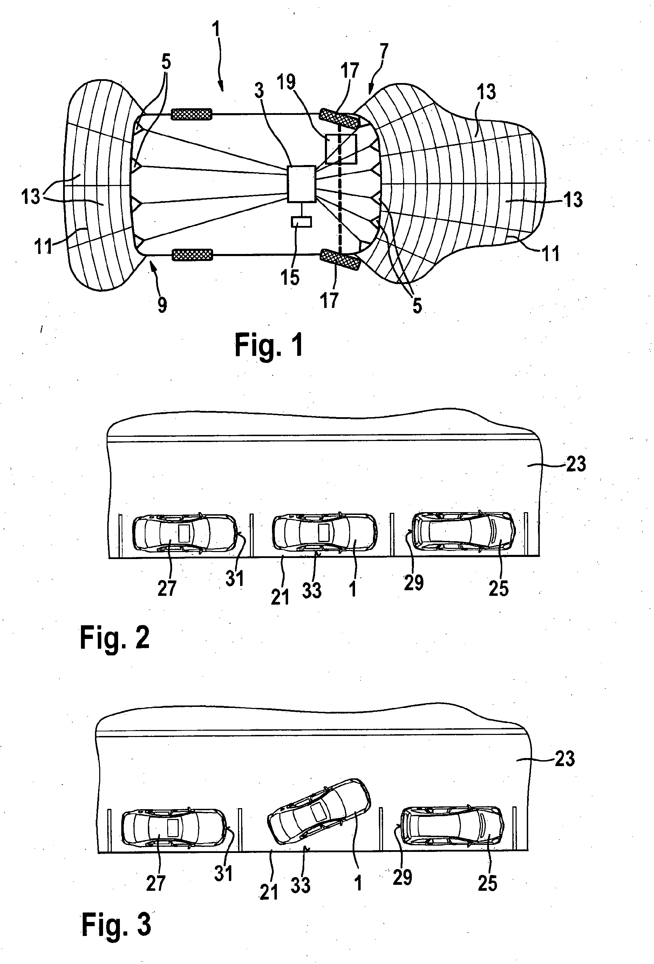

Figur 1 zeigt eine schematische Darstellung eines Fahrzeugs mit Abstandssensoren und einen durch die Abstandssensoren erfassbaren Bereich.

Ein Fahrzeug 1, mit dem das erfindungsgemäße Verfahren durchgeführt werden kann, umfasst ein Steuergerät 3, das mit Sensoren 5 zur Umfelderkennung verbunden ist. Die Sensoren 5 zur Umfelderkennung sind im Allgemeinen im Frontbereich 7 und im Heckbereich 9 des Fahrzeugs 1 angeordnet. Als Sensoren 5 zur Umfelderkennung eignen sich zum Beispiel Ultraschallsensoren, Radarsensoren, Infrarotsensoren, kapazitive Senoren oder LIDAR-Sensoren.

Die Sensoren 5 zur Umfelderkennung senden Impulse aus und empfangen das Echo dieser Impulse. Aus der Laufzeit kann dann die Entfernung zu einem Objekt, das die Impulse reflektiert, bestimmt werden. Wenn sich kein Objekt im Detektionsbereich 11 der Sensoren 5 zur Umfelderkennung befindet, wird der Impuls nicht reflektiert und es wird kein Echo vom Sensor 5 zur Umfelderkennung empfangen. Wenn sich ein Objekt im Detektionsbereich 11 befindet, so ist die Laufzeit des ausgesendeten Impulses, zum Beispiels des Schalls bei Verwendung eines Ultraschallsensors abhängig von der Schallgeschwindigkeit und der Entfernung des Objekts zum Sensor 5 zur Umfelderkennung. Je kleiner der Abstand des Objekts zum Sensor 5 zur Umfelderkennung ist, umso kürzer ist die Laufzeit. Aus Laufzeit und Schallgeschwindigkeit lässt sich dann der genaue Abstand des Objekts zum Fahrzeug 1 bestimmen.

Durch geeignete Auswerteverfahren, zum Beispiel Trilaterationsverfahren, die dem Fachmann geläufig sind, kann zum Beispiel aus dem Abstand eines Objekts zu verschiedenen Sensoren 5 zur Umfelderkennung die Position des Objekts bestimmt werden. Auf diese Weise lässt sich nicht nur die Entfernung zu einem Objekt, sondern auch der Ort des Objekts ermitteln. Zur Lagebestimmung eines Objekts ist es zum Beispiel möglich, den Detektionsbereich 11 in einzelne Zonen 13 zu unterteilen. Die einzelnen Zonen 13 weisen definierte Öffnungswinkel auf, so dass die Objekte den einzelnen Zonen 13 zugeordnet werden können. Durch die Zuordnung der Objekte zu den Zonen 13 lässt sich dem Fahrer die Position des Objekts darstellen. Um dem Fahrer Informationen über Objekte im Detektionsbereich 11 zu geben, ist das Steuergerät üblicherweise mit einer Anzeigevorrichtung 15 verbunden. Wenn die Anzeigevorrichtung 15 eine optische Anzeige ist, liegt diese vorzugsweise im direkten Blickfeld des Fahrers. Für das erfindungsgemäße Verfahren ist es vorteilhaft, wenn die Anzeigevorrichtung 15 ein Monitor ist, in dem das Fahrzeug 1 schematisch in zweidimensionaler Darstellung gezeigt werden kann. Zusätzlich sollte auf dem Monitor auch die Umgebung des Fahrzeugs 1 darstellbar sein. Alternativ ist es jedoch auch möglich, wie bei bereits bekannten Systemen zur Umfelderfassung zum Beispiel eine Anzeige des Abstandes zu einem Objekt durch Balken oder durch akustische Signale anzuzeigen.

Um eine automatische Lenkführung zum Ausparken des Fahrzeugs 1 und ein anschließendes Ausrichten der lenkbaren Räder 17 durch einen automatischen Lenkeingriff zu ermöglichen, wird das Steuergerät 3 weiterhin mit einem Lenkaktor 19 verbunden. Mit Hilfe des Lenkaktors 19 können so die Räder 17 derart ausgerichtet werden, dass vom Fahrzeug 1 eine vom Steuergerät 3 ermittelte Fahrtrajektorie überfahren wird. Zusätzlich kann durch das Ermitteln von Objekten in den Detektionsbereichen 11 eine Korrektur erfolgen, falls bei Befahren der vorgesehenen Fahrtrajektorie eine Kollision mit einem Objekt im Detektionsbereich drohen würde.

Zusätzlich zum Lenkaktor 19 ist es auch möglich, das Fahrzeug 1 mit Mitteln zur Längsführung auszustatten, die ebenfalls mit dem Steuergerät 3 verbunden werden. Durch Verwendung von Mitteln zur Längsführung lässt sich das Fahrzeug beschleunigen und bremsen und das Ausparkmanöver kann ohne Eingriff des Fahrers vollautomatisch vom Fahrzeug 1 durchgeführt werden. Wenn das Fahrzeug nur einen Lenkaktor 19 umfasst, muss der Fahrer noch selbsttätig Gas geben und bremsen, nur der Lenkvorgang wird vom Fahrzeug übernommen.

In Figur 2 ist ein in eine Längsparklücke eingeparktes Fahrzeug dargestellt.

Die in Figur 2 dargestellte Position des Fahrzeugs 1 in einer Längsparklücke 21 stellt eine Ausgangsposition dar, aus der das Ausparken des Fahrzeugs 1 beginnt.

Die Längsparklücke 21 ist in der hier dargestellten Ausführungsform parallel zu einer Fahrbahn 23 ausgerichtet.

In dem hier dargestellten Beispiel ist die Längsparklücke 21 durch ein vorderes Fahrzeug 25, das sich in Fahrtrichtung vor dem Fahrzeug 1 befindet, und ein hinteres Fahrzeug 27, das sich in Fahrtrichtung hinter dem Fahrzeug 1 befindet, begrenzt. Somit bildet das vordere Fahrzeug 25 eine vordere Begrenzung 29 der Parklücke 21 und das hintere Fahrzeug 27 eine hintere Begrenzung 31 der Parklücke 21.

Im idealen Fall ist das Fahrzeug 1 in der Parklücke 21 parallel zur Parklücke 21 und damit parallel zum vorderen Fahrzeug 25 und dem hinteren Fahrzeug 27 und auch parallel zur Fahrbahn 23 ausgerichtet. Eine optimale Position, wie sie in Figur 2 dargestellt ist, lässt sich zum Beispiel durch Einsatz eines automatischen Einparksystems erreichen. Es ist jedoch auch möglich, das Fahrzeug in die optimale Position durch entsprechende Rangiermanöver des Fahrers zu bewegen. Neben der in Figur 2 dargestellten optimalen Ausrichtung des Fahrzeugs 1 ist es auch möglich, dass das Fahrzeug 1 nicht ganz parallel zur Fahrbahn 23 in der Parklücke 21 ausgerichtet ist. Auch kann sich das Fahrzeug näher oder weiter vom seitlichen Rand 33 der Parklücke befinden. Der seitliche Rand 33 einer Längsparklücke kann zum Beispiel durch einen Bordstein, eine Mauer, Pflanzen oder andere Objekte gebildet werden. Insbesondere wenn der seitliche Rand 33 durch eine Fahrbahnbegrenzung oder einen Bordstein gebildet wird, wird der seitliche Rand 33 nicht von den Sensoren 5 zur Umfelderkennung erfasst. In diesem Fall erfolgt eine Ausrichtung des Fahrzeugs 1 beim Einparken im Allgemeinen anhand der Positionen des vorderen Fahrzeugs 25 und des hinteren Fahrzeugs 27. Bevorzugt wird das Fahrzeug 1 in diesem Fall so eingeparkt, dass die zur Fahrbahn 23 weisende Seite des Fahrzeugs 1 in Flucht ist mit den zur Fahrbahn 23 weisenden Seiten der Fahrzeuge 25, 27. Wenn die Fahrzeuge 25, 27 nicht in einer Flucht liegen, so wird das Fahrzeug 1 vorzugsweise so ausgerichtet, dass die zur Fahrbahn 23 weisende Seite des Fahrzeugs 1 auf einer halbierenden zwischen den die Seiten zur Fahrbahn der Fahrzeuge 25, 27 begrenzenden Geraden ausgerichtet wird. Es ist jedoch auch jede beliebige andere geeignete und dem Fachmann bekannte Ausrichtung des Fahrzeugs möglich. Die Art der Ausrichtung ist zum Beispiel auch von der Umgebung und den Anforderungen an das eingesetzte Fahrassistenzsystem abhängig.

In Figur 3 ist das Fahrzeug in der Längsparklücke in einer Position dargestellt, die ein Ausfahren durch Vorwärtsbewegung erlaubt.

In die in Figur 3 dargestellte Position wird das Fahrzeug 1 durch einen oder mehrere Rangierzüge gebracht. Wenn mehr als ein Rangierzug erforderlich ist, so werden diese abwechselnd durch Vorwärtsfahrt und Rückwärtsfahrt des Fahrzeuges durchgeführt. Bei jedem der Rangierzüge wird dann vom Steuergerät 3 ein geeigneter Lenkwinkel an den Lenkaktor 19 vorgegeben und die lenkbaren Räder 17 entsprechend gelenkt. Der vorgegebene Lenkwinkel wird so berechnet, dass das Ausparken mit der geringstmöglichen Anzahl an Rangierzügen möglich ist. Sobald das Fahrzeug in der in Figur 3 dargestellten Position ist, wird die volle Kontrolle über das Fahrzeug wieder an den Fahrer übergeben. Dies kann dem Fahrer zum Beispiel durch einen entsprechenden Hinweis auf der Anzeigevorrichtung zum Beispiel dem Bildschirm des Bordcomputers dargestellt werden oder auch akustisch signalisiert werden. Aus der in Figur 3 dargestellten Position muss der Fahrer lediglich einen Vorwärtsgang wählen und das Fahrzeug vorwärts auf die Fahrbahn 23 bewegen.

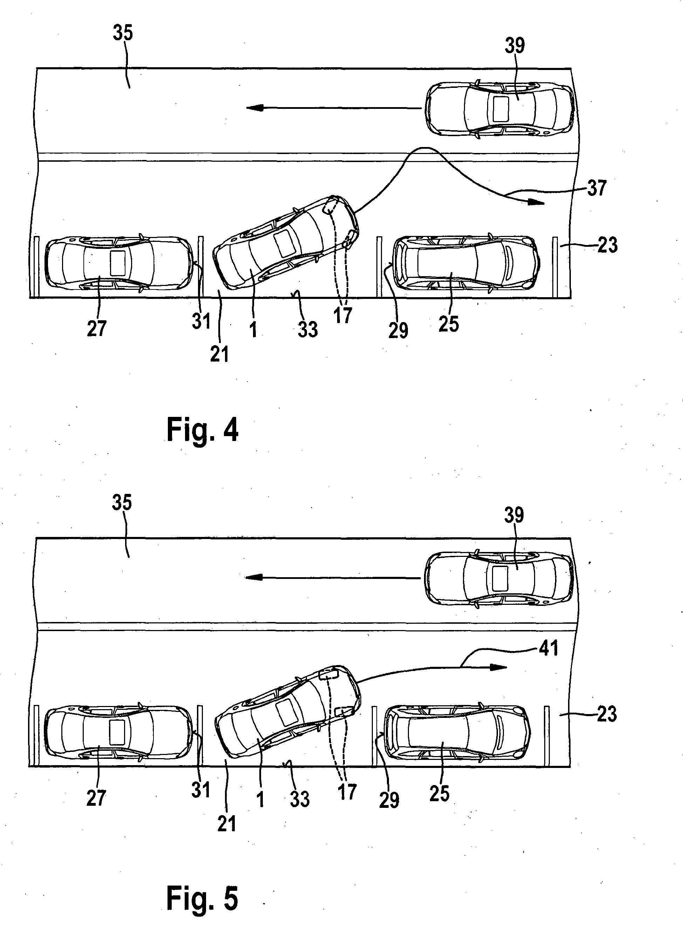

In Figur 4 ist eine Bahn dargestellt, entlang der sich ein Fahrzeug bei ungünstiger Radstellung bewegt.

Sobald sich das Fahrzeug in der in Figur 3 dargestellten Position befindet, ist es möglich, dass die lenkbaren Räder 17 in einer für die Vorwärtsfahrt ungünstigen Position stehen, wie dies in Figur 4 dargestellt ist. Die Position der lenkbaren Räder 17 führt zunächst dazu, dass der Fahrer das Fahrzeug 1 zunächst leicht auf eine Gegenfahrbahn 35 bewegt. Dieser Weg ergibt sich insbesondere dadurch, dass der Fahrer zunächst sehen muss in welche Richtung sich das Fahrzeug bewegt und dann einen Lenkvorgang einleiten muss. Durch den Lenkvorgang des Fahrers wird das Fahrzeug dann wieder auf die eigentliche Fahrbahn 23 gefahren. Der Weg, der sich bei ungünstiger Position der lenkbaren Räder 17 einstellt, ist durch eine entsprechende Bahn 37 in Figur 4 dargestellt. Das Überfahren der Bahn 37 bei ungünstiger Position der lenkbaren Räder 17 bei Fahrzeugübergabe an den Fahrer birgt insbesondere die Gefahr einer Kollision mit einem entgegenkommenden Fahrzeug 39. Durch die Bewegung des Fahrzeugs auf die Gegenfahrbahn 35 ist eine Kollision mit einem entgegenkommenden Fahrzeug 39 nicht auszuschließen. Bei herkömmlichen Verfahren ist die ungünstige Position der lenkbaren Räder 17 insbesondere dadurch möglich, dass der Fahrer nicht weiß, welchen Lenkzug das Fahrzeug zuletzt vorgenommen hat, da der Fahrer keinen Einfluss auf die Lenkung beim Ausparken gehabt hat.

Um eine solche Gefahrensituation, wie sie in Figur 4 dargestellt ist, auszuschließen und damit eine mögliche Kollision mit einem entgegenkommenden Fahrzeug 39 vermeiden zu können, werden erfindungsgemäß die lenkbaren Räder 17 des Fahrzeugs 1 beim Abschluss des vom System gesteuerten Ausparkvorganges zur Übergabe des Fahrzeugs an den Fahrer in eine günstige Position gebracht. Eine solche günstige Position der lenkbaren Räder 17 und der Bahn, entlang der sich das Fahrzeug bei günstiger Radstellung bewegt, ist in Figur 5 dargestellt.

Erfindungsgemäß werden die lenkbaren Räder 17 zum Abschluss des Ausparkvorganges, sobald sich das Fahrzeug in einer Position befindet, die ein Ausfahren aus der Parklücke durch eine Vorwärtsbewegung des Fahrzeugs 1 erlaubt, in eine günstige Position ausgerichtet. Die günstige Position der lenkbaren Räder 17 wird so gewählt, dass ein Ausfahren aus der Parklücke 21 in Richtung der Straßenführung und damit direkt in Richtung der Fahrbahn 23 ermöglicht wird. Durch die Ausrichtung der lenkbaren Räder 17 wird eine mögliche Kollision mit einem entgegenkommenden Fahrzeug 39 beim Losfahren vermieden. Durch die günstige Ausrichtung der lenkbaren Räder 17 ergibt sich eine Bahn 41, wie sie in Figur 5 dargestellt ist.

Das Ausrichten der lenkbaren Räder 17 kann zum Beispiel aus der in Figur 4 dargestellten Position im Stand erfolgen. Alternativ ist es jedoch auch möglich, dass der letzte Parkzug, der vorgenommen wird, um das Fahrzeug 1 aus der Parklücke 21 auszuparken entlang einer Klothoide geführt wird, an deren Ende sich die lenkbaren Räder 17 bereits in einer für das Weiterfahren günstigen Position, wie sie in Figur 5 dargestellt ist, befinden.

Die günstige Position der lenkbaren Räder 17 wird so gewählt, dass neben einer möglichen Kollision mit einem entgegenkommenden Fahrzeug 39 auch eine Kollision mit einem die Parklücke 21 begrenzenden Objekt, das die vordere Begrenzung 29 bildet, vermieden wird. So sollte insbesondere bei einem vorderen Fahrzeug 25, das die vordere Begrenzung 29 bildet, eine Kollision mit dem vorderen Fahrzeug 25 verhindert werden. In Abhängigkeit vom Winkel, den das Fahrzeug 1 bei Übergabe der Kontrolle an den Fahrer einnimmt, können die lenkbaren Räder 17 somit bereits in Richtung der Straßenführung weisen oder aber noch einen davon abweichenden Winkel einnehmen, um das die vordere Begrenzung 29 bildende Objekt sicher umfahren zu können. Bevorzugt wird das Fahrzeug jedoch bei Übergabe so in der Parklücke 21 positioniert, dass die lenkbaren Räder 17 in Richtung der Straßenführung weisen.

Die Ermittlung der Straßenführung kann zum Beispiel anhand von vorbeifahrenden Fahrzeugen, beispielsweise auch entgegenkommenden Fahrzeugen 39 ermittelt werden. Alternativ kann zur Bestimmung der Straßenführung, wie bereits vorstehend beschrieben, auch Kartenmaterial des Navigationssystems und die durch GPS bestimmte Position des Fahrzeuges genutzt werden. Alternativ ist es auch möglich, Daten der Umgebung der Parklücke 21 zu speichern, die beim Einparken erfasst worden sind. So lässt sich zum Beispiel die Ausrichtung des vorderen Fahrzeugs 25 und des hinteren Fahrzeugs 27 nutzen, um die Straßenführung und damit die Richtung, in die das Fahrzeug 1 sich beim Vorwärtsfahren aus der Parklücke bewegen sollte, zu ermitteln. Anhand der so ermittelten Straßenführung können dann die lenkbaren Räder 17 bei Übergabe der Kontrolle an den Fahrer ausgerichtet sein.

Neben der Position des Fahrzeugs in der Parklücke 21 bei Übergabe der Kontrolle an den Fahrer ist auch die Straßenführung relevant für die Position der lenkbaren Räder 17 bei Übergabe der Kontrolle an den Fahrer. So kann sich zum Beispiel die Radstellung der lenkbaren Räder 17 bei Übergabe der Kontrolle in einer Kurve von der Radstellung der lenkbaren Räder 17 bei Übergabe auf einem geraden Straßenstück unterscheiden..

## Patentansprüche

1. Verfahren zur Unterstützung eines Fahrers beim Ausparken eines Fahrzeugs (1) aus einer Parklücke (21), folgende Schritte umfassend:
(a) Bringen des Fahrzeugs (1) in eine Position, die ein Ausfahren aus der Parklücke (21) durch eine Vorwärtsbewegung des Fahrzeugs (1) erlaubt, unter Einsatz einer automatischen Lenkführung,
(b) Ausrichten der lenkbaren Räder (17) durch einen automatischen Lenkeingriff in eine Radstellung, die ein Ausfahren aus der Parklücke (21) in Richtung der Straßenführung ermöglicht,
**dadurch gekennzeichnet, dass** die Straßenführung durch Erfassung der Bewegungsrichtung vorbeifahrender Fahrzeuge (39) ermittelt wird.

2. Verfahren gemäß Anspruch 1, **dadurch gekennzeichnet, dass** das Ausrichten der lenkbaren Räder (17) in Schritt (b) im Stillstand erfolgt.

3. Verfahren gemäß Anspruch 2, **dadurch gekennzeichnet, dass** das Ausrichten der lenkbaren Räder (17) in Schritt (b) während eines letzten Rangierzuges erfolgt.

4. Verfahren gemäß einem der Ansprüche 1 bis 3, **dadurch gekennzeichnet, dass** die Straßenführung durch Kartenmaterial in einem Navigationsgerät des Fahrzeugs (1) ermittelt wird.

5. Verfahren gemäß einem der Ansprüche 1 bis 4, **dadurch gekennzeichnet, dass** die Bewegungsrichtung vorbeifahrender Fahrzeuge (39) durch Videosensorik oder Radarsensoren erfasst wird.

6. Verfahren gemäß einem der Ansprüche 1 bis 3, **dadurch gekennzeichnet, dass** das Ausrichten der lenkbaren, Räder (17) in Schritt (b) nach festgesetzten Grenzen, die in einem Speicher abgelegt sind, erfolgt.

7. Verfahren gemäß einem der Ansprüche 1 bis 6, **dadurch gekennzeichnet, dass** die lenkbaren Räder (17) in Schritt (b) in Richtung der Straßenführung ausgerichtet werden.

8. Verfahren gemäß einem der Ansprüche 1 bis 7, **dadurch gekennzeichnet, dass** das in Position bringen in Schritt (a) automatisch durch automatische Lenkführung und durch automatische Längsführung erfolgt.

9. Verfahren gemäß einem der Ansprüche 1 bis 8, **dadurch gekennzeichnet, dass** während des in Position bringen in Schritt (a) die Fahrzeugumgebung kontinuierlich erfasst wird.

10. Fahrassistenzsystem zur Unterstützung eines Fahrers eines Fahrzeugs beim Ausparken aus einer Parklücke, umfassend:
- Mittel zur Bestimmung von Fahrtrajektorien, um das Fahrzeug (1) in eine Position zu bringen, die ein Ausfahren aus der Parklücke (21) durch eine Vorwärtsbewegung erlaubt,
- Mittel zur Bestimmung der Straßenführung durch Erfassung der Bewegungsrichtung vorbeifahrender Fahrzeuge (39) und
- einen Lenkaktor (19) der in Abhängigkeit der Fahrtrajektorien einen Lenkeingriff vornimmt, um das Fahrzeug (1) entlang der Fahrtrajektorien zu bewegen sowie nach dem in Position bringen, durch die ein Ausfahren aus der Parklücke (21) durch eine Vorwärtsbewegung erlaubt ist, einen Lenkeingriff vornimmt, um die Räder (17) in eine Radstellung zu bringen, die ein Ausfahren aus der Parklücke (21) entlang der Straßenführung ermöglicht.

## Claims

1. Method for providing assistance to a driver when driving a vehicle (1) out of a parking space (21), comprising the following steps:
(a) moving the vehicle (1) into a position which permits the vehicle (1) to be driven out of the parking space (21) by means of a forward movement using an automatic steering guide,
(b) orienting the steerable wheels (17) by means of an automatic steering intervention into a wheel position which permits driving out of the parking space (21) in the direction of the road layout,
**characterized in that** the road layout is determined by sensing the direction of movement of passing vehicles (39).

2. Method according to Claim 1, **characterized in that** the steerable wheels (17) are oriented in the stationary state in step (b).

3. Method according to Claim 2, **characterized in that** the steerable wheels (17) are oriented during a last manoeuvring motion in step (b).

4. Method according to one of Claims 1 to 3, **characterized in that** the road layout is determined by means of map material in a navigation device of the vehicle (1).

5. Method according to one of Claims 1 to 4, **characterized in that** the direction of movement of passing vehicles (2) is sensed by a video sensor system or wheel sensors.

6. Method according to one of Claims 1 to 3, **characterized in that** the steerable wheels (17) are oriented in step (b) according to fixed limits which are stored in a memory.

7. Method according to one of Claims 1 to 6, **characterized in that** the steerable wheels (17) are oriented in the direction of the road layout in step (b).

8. Method according to one of Claims 1 to 7, **characterized in that** the placing in position in step (a) takes place automatically by means of automatic steering guidance and by means of automatic longitudinal guidance.

9. Method according to one of Claims 1 to 8, **characterized in that** the surroundings of the vehicle are sensed continuously during the placing in position in step (a).

10. Driving assistance system for assisting a driver of a vehicle when driving out of a parking space, comprising:
- means for determining driving trajectories in order to place the vehicle (1) in a position which permits driving out of the parking space (21) by means of a forward movement,
- means for determining the road layout by sensing the direction of movement of passing vehicles (39), and
- a steering actuator (19) which performs a steering intervention as a function of the driving trajectories in order to move the vehicle (1) along the driving trajectories, and after the placing in position, which permits driving out of the parking space (21) by means of a forward movement, performs a steering intervention in order to move the wheels (17) into a wheel position which permits driving out of the parking space (21) along the road layout.

## Revendications

1. Procédé d'assistance d'un conducteur lors de la sortie de stationnement d'un véhicule (1) hors d'une place de stationnement (21), comprenant les étapes suivantes :
(a) amenée du véhicule (1) dans une position permettant une sortie hors de la place de stationnement (21) par un mouvement en marche avant du véhicule (1), en faisant intervenir un guidage de braquage automatique ;
(b) orientation des roues motrices (17) par une intervention de braquage automatique dans une position de roue permettant de sortir de la place de stationnement (21) en direction du tracé de route ;
**caractérisé en ce que** le tracé de route est calculé par détection de la direction de déplacement des véhicules (39) avançant en marche avant.

2. Procédé selon la revendication 1, **caractérisé en ce que** l'orientation des roues motrices (17) se produit à l'arrêt à l'étape (b).

3. Procédé selon la revendication 2, **caractérisé en ce que** l'orientation des roues motrices (17) se produit à l'étape (b) pendant une dernière manoeuvre de stationnement.

4. Procédé selon l'une quelconque des revendications 1 à 3, **caractérisé en ce que** le tracé de route est calculé par le biais d'un matériau cartographique dans un appareil de navigation du véhicule (1).

5. Procédé selon l'une quelconque des revendications 1 à 4, **caractérisé en ce que** la direction de déplacement des véhicules (39) avançant en marche avant est détectée par un système de détection vidéo ou par des détecteurs radar.

6. Procédé selon l'une quelconque des revendications 1 à 3, **caractérisé en ce que** l'orientation des roues motrices (17) à l'étape (b) s'effectue d'après des limites fixes mémorisées dans une mémoire.

7. Procédé selon l'une quelconque des revendications 1 à 6, **caractérisé en ce que** les roues motrices (17) sont orientées en direction du tracé de route à l'étape (b).

8. Procédé selon l'une quelconque des revendications 1 à 7, **caractérisé en ce que** la prise de position s'effectue automatiquement à l'étape (a) par guidage de braquage automatique et par guidage longitudinal automatique.

9. Procédé selon l'une quelconque des revendications 1 à 8, **caractérisé en ce que** l'environnement du véhicule est détecté en continu pendant la prise de position à l'étape (a).

10. Système d'assistance à la conduite permettant d'assister un conducteur d'un véhicule lors de la sortie de stationnement hors d'une place de stationnement, comprenant :
des moyens pour déterminer les trajectoires de conduite permettant d'amener le véhicule (1) dans une position permettant de sortir hors d'une place de stationnement (21) par un mouvement en marche avant ;
des moyens pour déterminer le tracé de route par détection de la direction de déplacement des véhicules (39) avançant en marche avant ; et
un actionneur de braquage (19) effectuant une intervention de braquage en fonction des trajectoires de conduite, pour déplacer le véhicule (1) le long des trajectoires de conduite ainsi que pour l'amener ensuite dans la position permettant une sortie de la place de stationnement (21) par un mouvement en marche avant, effectuant une intervention de braquage permettant d'amener les roues (17) dans une position de roue permettant une sortie hors de la place de stationnement (21) le long du tracé de route.
